# EUROPEAN PATENT SPECIFICATION

(11) **EP 1 648 739 B1**
(45) Date of publication and mention of the grant of the patent: **06.02.2008**
(21) Application number: 04743424.6
(22) Date of filing: 16.07.2004
(51) Int. Cl.: B60R 7/04

(54) **LOCKABLE VEHICLE STORAGE IN RESPONSE OF DOORS**
VERSCHLIESSBAR BEHÄLTER IN FUNKTION DER TÜREN
COFFRET DE RANGEMENT D'UN VEHICULE, VERROUILLE PAR LE BLOCAGE DES PORTES

(30) Priority: 16.07.2003 GB 0316596
(43) Date of publication of application: 26.04.2006
(73) Proprietor: Nissan Motor Manufacturing (UK) Ltd., Bedfordshire MK43 0DB (GB)
(72) Inventor: NOBLE, Paul, Nissan Technical Centre Europe Ltd, Bedfordshire MK43 0DB (GB)
(74) Representative: Holmes, Matthew William
(86) International application number: PCT/GB2004/003085
(87) International publication number: WO 2005/007456

(56) References cited:
- EP-A- 0 589 188
- WO-A-03/011646
- GB-A- 2 211 552
- GB-A- 2 316 608
- US-A- 5 816 650
- US-A- 6 102 463

## Description

The present invention relates to lockable vehicle storage and particularly, but not exclusively, to a lockable under-seat storage system for a vehicle such as an automobile.

It is known to provide storage areas under vehicle seats, such as under the front passenger seat of an automobile. One system that provides a storage area under a vehicle seat is described in GB2316608. In this document, a vehicle seat is disclosed having a seat back or squab and a seat base or cushion. The cushion is pivotably mounted to a frame of the seat at a front region thereof such that it is able to pivot or rotate in a generally fore/aft direction relative both to the seat back and to the frame.

Under the cushion, and within the frame which is rigidly mounted to the vehicle floor, a storage container or receptacle is provided for the storage of small or medium-sized items such as electrical devices, tools or other vehicle accessories. To access the storage area, the seat cushion is lifted and pivoted forwardly by the user such that items can be placed in or removed from the container.

WO03/011646 A discloses a seat for a vehicle, the seat comprising:
a base portion 3 affording a space 7 for receiving one or more articles therein, a cushion element 4 movable between a first position in which it covers said space 7 and a second position in which access to said space 7 is provided, and locking means 27; the locking means 27 being movable between an unlocked state and a locked state for locking said cushion element 4 in said first position thereby to hinder or substantially prevent access to said space 7;
wherein the locking means 27 is configured so as to enable the cushion element 4 to be moved from the second position to the first position

A disadvantage of such under-seat storage systems is that, since their use is becoming more common in production vehicles, they no longer represent a secure storage location within the vehicle for valuable items. It is thus extremely easy for a thief or the like, once access to the vehicle has been achieved, simply to raise the seat cushion to gain access to the storage container and to remove any valuable items located therein.

It would be an advantage to provide an under-seat storage system of this kind but of a more secure nature.

According to one aspect of the present invention, therefore, there is provided a seat for a vehicle comprising a base portion affording a space for receiving one or more articles therein, a cushion member movable between a first position in which it covers the space and a second position in which access to the space is provided, and locking means for selectively locking the cushion member in the first position thereby to hinder or substantially prevent access to the space, characterised in that the locking means is arranged to lock the cushion member in the first position in response to locking of the vehicle doors.

Advantageously, access to the space is hindered or substantially prevented when the vehicle doors are locked by virtue of the locking means. Security for valuables or other articles stored in the space is therefore improved.

In one embodiment, the locking means is arranged to unlock the cushion member, thereby to permit movement thereof between the first and second positions, in response to unlocking of the vehicle doors.

The locking means may comprise latch means mounted on the cushion member and catch means arranged to move between a first catch position and a second, non-catch position.

The latch means may be operable to cooperate or engage with the catch means when the latter is in its first, catch position and the cushion member is in its first position, thereby to hinder or substantially prevent movement of the cushion member between the first and second positions.

In one embodiment, when the catch means is in the second, non-catch position, the latch means does not engage therewith and the cushion member is able to move between the first and second positions.

The catch means may comprise a bar or core of a solenoid actuator or the like, the bar or core being selectively movable between the first, catch position and the second, non-catch position. This may be in dependence on the lock/unlock status of the vehicle doors.

In one embodiment, the latch means comprises a hook member mounted to the cushion member. The hook member may be pivotally mounted to the cushion member.

The seat may additionally comprise a further latch arrangement for selectively retaining the cushion member in the first position when the catch means is in the second, non catch position. The further latch arrangement may be adapted to release the cushion member thereby to permit movement of the cushion member between the first and second positions, release being effected by manual operation of the latch arrangement.

The present invention will now be described, by way of example only, with reference to the accompanying drawings in which:
Figure 1 is a perspective view of a known vehicle seat;
Figure 2 is a component diagram of a locking mechanism for a preferred form of seat according to the invention; and
Figures 3a-3c illustrate operation of the locking mechanism of Figure 2.

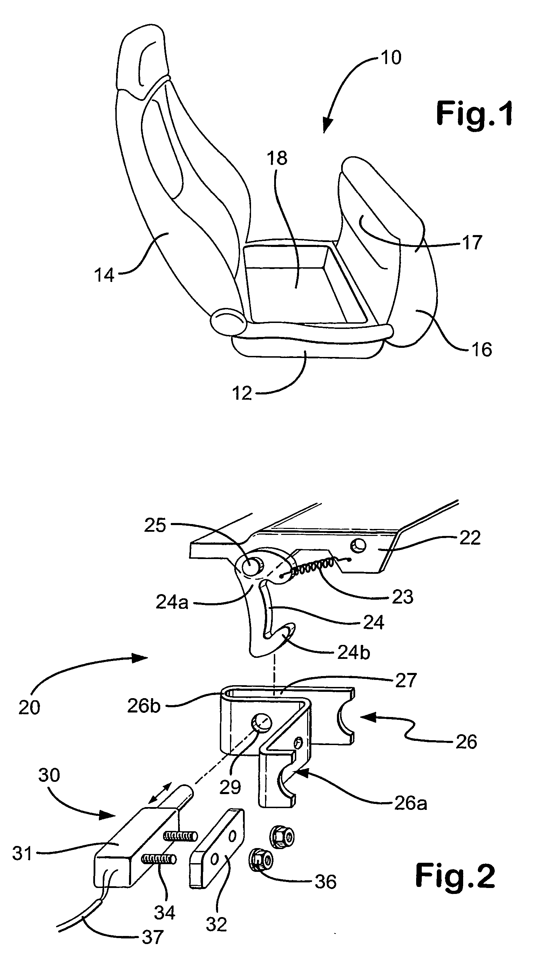

Referring to Figure 1, a known seat for a vehicle such as an automobile is shown generally at 10. The seat comprises a base 12 and a back-rest or squab 14 which extends upwardly from the base portion 12 and may be adjustable in respect of its angle of inclination relative thereto. A cushion member 16 having a lower surface 17 is pivotally secured to the base portion 12 by pivot means such as a hinge (not shown) disposed at or towards the forward end of the base portion 12.

Within the base portion 12 there is defined a space 18 in which one or more articles may be received. The cushion member 16 is pivotable relative to the base portion 12 of the seat between a first, seating position (not illustrated) in which the cushion member is oriented generally horizontally, covering the space 18, and may be sat upon in a conventional manner, and a second, raised or open position as shown in Figure 1 in which access to the space 18 in the base 12 of the seat is provided.

The disadvantages of this form of seat are discussed above. Specifically, this form of seat is becoming more frequently used in production automobiles and thus represents a less secure system for the storage of valuable items within the vehicle.

The seat of the invention is similar in form to that of Figure 1 but additionally comprises locking means in the form of a mechanism for selectively locking the cushion member 16 in the first, seating position, thereby to hinder or prevent movement of the cushion member between the first and second positions and hence access to the space 18.

Referring now to Figure 2 a locking mechanism for a preferred form of seat according to the invention is shown generally at 20.

The lower surface 17 of the cushion member 16 of the seat (shown in the inset) is provided with support means in the form of a rigid base plate 22 mounted thereto. Latch means, in the form of a hook member 24, is pivotally or rotatably mounted to an edge region of the base plate 22 such that it extends in a generally downward direction when the cushion member is disposed in its first, seating position.

The hook member 24 comprises a generally downwardly directed body portion 24a, one end of which is pivotally attached to the base plate 22, and an upturned hook portion 24b disposed at the free end of the body portion 24a. The hook member 24 is arranged to pivot or rotate about a pivot point defined by a rivet 25 in a plane substantially perpendicular to plane of the main body of the base plate 22, that is to say in a substantially vertical plane.

A resilient member in the form of a coil spring 23 is mounted at one end thereof to the edge region of the base plate 22 and at the other end thereof to the body portion 24a of the hook member 24. The arrangement is such that the hook member 24 is permitted to rotate or pivot in the vertical plane as described above but, in the absence of any external force, is maintained in the above-described downward orientation by the resilient action of the spring 23.

The locking mechanism 20 also includes a bracket member 26 in the form of a strip of a generally rigid material such as steel. The bracket member 26 is bent to form a substantially straight mounting portion 26a, which is arranged for mounting on a frame (not shown) of the vehicle seat, and a generally U-shaped catch portion 26b defining a channel 27.

Actuator means, in the form of an electrically operated solenoid 30 is, in use, attached to the mounting portion 26a of the bracket member 26 via a flexible mounting member 32. The mounting member is formed from a synthetic rubber or other flexible material. The solenoid 30 is provided with two parallel, outwardly extending shafts or bolts 34 which, in use, are arranged for insertion through corresponding apertures disposed within the mounting member 32 and the mounting portion 26a of the bracket member 26. At least an end portion of each of the bolts 34 is provided with an external thread for engagement with a nut 36 or similar fixing member.

It will be understood that the bolts 34 and nuts 36 are used to mount the solenoid 30 to the bracket member 26 via the mounting member 32. In addition, the bolts 34 may be used to mount the solenoid 30, mounting member 32 and bracket member 26 to the frame of the seat, the latter therefore also being provided with apertures corresponding to those of the solenoid 30, the mounting member 32 and the bracket member 26.

The solenoid 30 is conventional, having a housing 31 within which a coil or solenoid is disposed. The solenoid 30 is arranged such that an electrical current can be passed through the coil by application of a voltage across two input wires 37. Depending on the polarity of the voltage applied to the input wires 37, the coil generates a magnetic field which causes a bar 38 either to be extended from the housing 31 or to be withdrawn into the housing.

Specifically, when a voltage having a first polarity is applied across the input wires 37 of the solenoid 30, a current flows through the coil within the solenoid which is thereby energised and magnetically retracts the bar 38 into the solenoid housing 31. When a voltage having the opposite polarity is applied across the input wires 37 of the solenoid 30, the bar 38 extends out of the solenoid housing 31 into the position illustrated in Figure 2.

In use, the solenoid housing 31 is mounted to the bracket member 26, via the mounting member 32, such that the bar 38, in its extended position, extends through two axially aligned apertures 29 disposed in the catch portion 26b of the bracket member 26, across the channel 27.

The arrangement is such that, in use, when the cushion member 16 is in the first, seating position, the hook member 24 extends into the channel 27 defined by the catch portion 26b of the catch member 26.

The input wires 37 of the solenoid 30 are connected to a control unit (not shown) of a central locking system of the vehicle. The control unit is arranged, in conventional manner, to apply a voltage to each of a plurality of lock actuators for the vehicle doors in response to a LOCK or UNLOCK command signal being applied thereto.

The command signal may be an electromagnetic signal generated by a remote key fob or token or an electrical signal generated in response to the turning of a key in a lock barrel. The voltage applied to the lock actuators causes the actuators to lock or unlock the vehicle doors in dependence on the polarity of the voltage generated by the control unit. Such control units, and the operation thereof, will be well understood by the skilled person.

In respect of the present invention, the control unit is arranged additionally to apply a voltage across the input wires 37 of the solenoid 30. The polarity of the voltage applied to the input wires 37 by the control unit is dependent upon whether the command signal applied to the control unit is the LOCK signal or the UNLOCK signal.

If the LOCK signal is applied to the control unit, the latter applies a voltage having a first polarity across the input wires 37. This causes the bar 38 to extend out of the housing 31 of the solenoid 30. On the other hand, if the UNLOCK signal is applied to the control unit, the latter applies a voltage having a second polarity across the input wires 37. This causes the bar 38 to be withdrawn into the housing 31, as described above.

In use, a user of the vehicle unlocks the vehicle in the conventional manner, either by the actuating of an appropriate button on the key fob or by inserting the vehicle key into the lock and turning it. This action generates the UNLOCK command signal which is applied to the control unit. The control unit generates and applies a voltage having the second polarity to the lock actuators of the vehicle doors, causing them to be unlocked, and also across the input wires 37 of the solenoid 30.

This voltage causes the bar 38 to be withdrawn into the housing 31 of the solenoid 30. With the bar 38 retracted, the user is able to lift and pivot the cushion member of the seat to give access to the storage space disposed within the base portion of the seat. Valuables and small items can thus be stored therein.

When exiting and leaving the vehicle, the user locks the vehicle, again either by actuating the appropriate button on the key fob or by inserting the vehicle key into the lock and turning it. This action generates the LOCK command signal which is applied to the control unit. The control unit generates and applies a voltage having the first polarity to the lock actuators of the vehicle doors, causing them to be locked, and also across the input wires 37 of the solenoid 30.

This voltage causes the bar 38 to be extended out of the housing 31 of the solenoid 30. The bar 38 extends through the apertures 29 in the bracket member 26 and across the channel 27 of the catch portion 26b. The presence of the bar 38 prevents the cushion member 16 of the seat from being lifted and pivoted since the upturned hook of the hook member 24 engages with the bar 38 and cannot move therepast. Thus, access to the storage space 18 is hindered or substantially prevented.

In order to access the space, the locking mechanism must be unlocked in the manner described above. Advantageously, therefore, any thief breaking into the vehicle will be unable to gain access to the storage space without dismantling or destroying the seat. Any valuables stored therein therefore remain relatively secure.

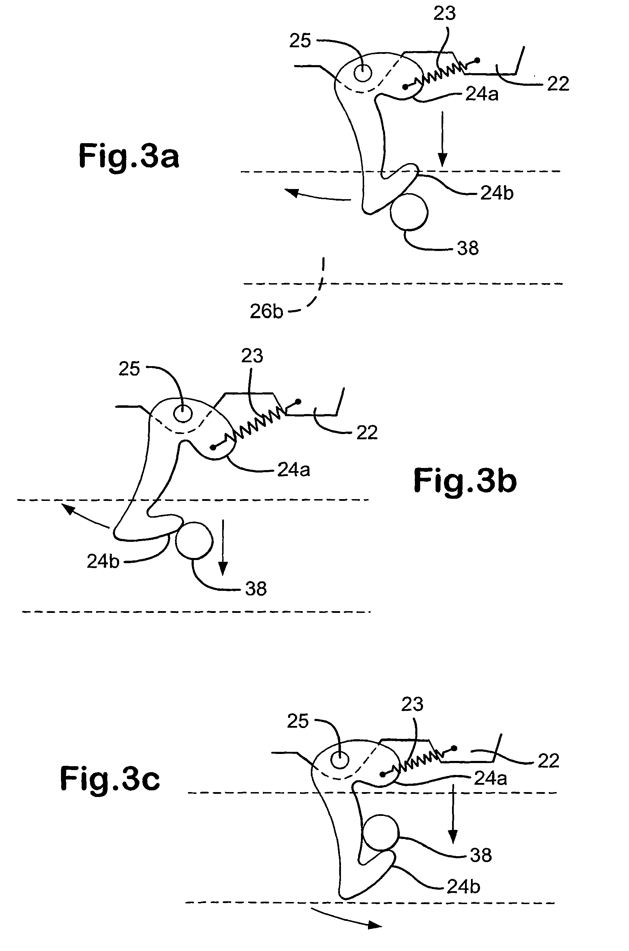

In the event that the locking mechanism 20 is, for some reason, locked whilst the cushion member 16 is in the second, raised position, the cushion member 16 can still be moved into the first position and locked without further adjustment or operation of the locking mechanism. In this case, the cushion member 16 is rotated to the first position until the lower edge of the hook member 24 engages with the bar 38 extending across the channel 27 of the catch portion 26b (Figure 3a). As further downward pressure is applied to the cushion member 16, the lower edge of which continues to bear against the bar 38, the hook member 24 rotates or pivots against the biasing force of the spring 23 as illustrated in Figure 3b.

Further downward pressure causes the hook 24b of the hook member 24 to move past the bar 38 at which point the hook member 24 is returned to its natural, downwardly-directed position shown in Figure 3a under the biasing force of the spring. Thereafter, the cushion member 16 cannot be lifted and pivoted owing to the latching effect between the hook 24b and the bar 38.

In another embodiment (not illustrated), means are provided for selectively locking the cushion member 16 in the first position substantially independently of the locked or unlocked status of the vehicle doors. For example, a switch may be provided in the vehicle, preferably within reach of the driver, which permits the driver to lock or unlock the cushion member 16 whilst the ignition of the vehicle is on (although not necessarily with the engine of the vehicle on).

The switch is connected to the control unit and is a two-way switch having a first position in which the control unit applies a voltage of the second polarity across the input wires 37 of the solenoid, thereby to unlock the cushion member and a second position in which the control unit applies a voltage of the first polarity across the input wires 37 of the solenoid, thereby to lock the cushion member 16 in the first position.

The system is arranged such that on locking the vehicle, the locking mechanism 20 also locks the cushion member 16 in the first, seating position but the cushion member 16 is not automatically unlocked on unlocking the vehicle. In this way, the cushion member 16 can only be unlocked by an occupant of the vehicle when the vehicle ignition is on and is automatically locked when the vehicle itself is locked, although it can also be selectively locked by an occupant of the vehicle by means of the switch.

In one embodiment, the seat includes an additional latch arrangement for preventing the cushion member from bouncing open when the locking mechanism 20 is unlocked due to the motion of the vehicle. The latch arrangement may comprise a spring mounted latch element mounted on the cushion member 16 which is operable to engage with a cooperating catch element located on the seat frame.

When the cushion element is in its closed position, the latch element cooperatively engages with the catch element to retain the cushion member in the closed position even when the bar 38 of the solenoid arrangement is retracted. To open the cushion member 16 in order to gain access to the storage space, the user manually releases the latch element from the catch element and, provided that the locking mechanism 20 is unlocked, the cushion element may be rotated to the open position as described above.

The latch arrangement may be of any suitable design or construction. It will also be appreciated that the mechanism for locking the cushion member in the first position can take a number of forms as desired.

It will be appreciated that the present invention provides a simple yet effective solution to the problem of providing a secure storage facility in a vehicle. In one embodiment, the cushion element 16 is coupled to the vehicle central locking system and is thus locked and unlocked with the vehicle doors. In a modification to this arrangement, a separate switch may be provided for selectively locking and unlocking the cushion element independently of the vehicle doors.

The embodiments described above may be employed individually or in combination but are included herein by way of example only. Nothing in this description is intended to limit the invention, the scope of which is defined in the appended claims.

## Claims

1. A seat (10) for a vehicle, the seat comprising:
a base portion (12) affording a space (18) for receiving one or more articles therein,
a cushion element (16) movable between a first position in which it covers said space and a second position in which access to said space is provided, and
locking means (20) movable in response to locking of the vehicle doors; the locking means being movable between an unlocked state and a locked state for locking said cushion element in said first position thereby to hinder or substantially prevent access to said space;
wherein the locking means is configured so as to enable the cushion element to be moved from the second position to the first position when the locking means is in the locked state.

2. A seat as claimed in claim 1 wherein the locking means (20) is arranged to lock the cushion element (16) in the first position in response to locking of the vehicle doors.

3. A seat as claimed in claim 1 or claim 2 wherein the locking means (20) is arranged to unlock the cushion element (16), thereby to permit movement thereof between the first and second positions, in response to unlocking of the vehicle doors.

4. A seat as claimed in any preceding claim wherein the locking means (20) comprises latch means (22, 24) mounted on the cushion element (16) and catch means (26, 30) arranged to move between a first catch position and a second, non-catch position.

5. A seat as claimed in claim 4 wherein when the catch means (26, 30) is in the first, catch position, the latch means (22, 24) engages therewith when the cushion element (16) is in its first position, thereby to hinder or substantially prevent movement of the cushion element between the first and second positions.

6. A seat as claimed in claim 4 or claim 5 wherein when the catch means (26, 30) is in the second, non-catch position, the latch means (22, 24) does not engage therewith and the cushion element (16) is able to move between the first and second positions.

7. A seat as claimed in any of claims 4 to 6 wherein the catch means (26, 30) comprises a bar (38) of a solenoid (30) arrangement, the bar being selectively movable between the catch and the non-catch positions.

8. A seat as claimed in any of claims 4 to 7 wherein the latch means (22, 24) comprises a hook member (24) mounted to the cushion element (16).

9. A seat as claimed in claim 8 wherein the hook member (24) is pivotally mounted to the cushion element (16).

10. A seat as claimed in claim 9 wherein the further latch arrangement is adapted to release the cushion element (16) thereby to permit movement of the cushion element between the first and second positions, release being effected by manual operation of the latch arrangement.

## Patentansprüche

1. Ein Sitz (10) für ein Fahrzeug, wobei der Sitz umfasst:
einen Basisabschnitt (12), der einen Raum (18) zur Aufnahme eines oder mehrer Gegenstände in ihm bietet,
ein Polsterelement (16), das zwischen einer ersten Position, in der es den Raum bedeckt, und einer zweiten Position, in der Zugriff auf den Raum gewährt wird, bewegbar ist, und
ein Verschlussmittel (20), das als Antwort auf das Verriegeln der Fahrzeugtüren bewegbar ist;
wobei das Verschlussmittel zwischen einem unverriegelten und einem verriegelten Zustand zum Verschließen des Polsterelements in der ersten Position bewegbar ist, wobei der Zugriff auf den Raum behindert oder im Wesentlichen verhindert wird;
wobei das Verschlussmittel so konfiguriert ist, dass das Polsterelement von der zweiten Position in die erste Position bewegbar ist, wenn sich das Verschlussmittel im verriegelten Zustand befindet.

2. Sitz nach Anspruch 1, wobei das Verschlussmittel (20) so angeordnet ist, dass das Polsterelement (16) in Antwort auf das Verriegeln der Fahrzeugtüren in der ersten Position verriegelt wird.

3. Sitz nach Anspruch 1 oder 2, wobei das Verschlussmittel (20) so angeordnet ist, dass das Polsterelement (16) in Antwort auf das Entriegeln der Fahrzeugtüren entriegelt wird, wobei seine Bewegung zwischen der ersten und zweiten Position erlaubt wird.

4. Sitz nach einem der vorangehenden Ansprüche, wobei das Verschlussmittel (20) ein Verriegelungsmittel (22, 24), das an dem Polsterelement (16) befestigt ist, und ein Haltemittel (26, 30), das so angeordnet ist, dass es sich zwischen einer ersten Halteposition und einer zweiten nicht haltenden Position bewegen kann, umfasst.

5. Sitz nach Anspruch 4, wobei, wenn das Haltemittel (26, 30) in der ersten, der Halteposition ist, das Verriegelungsmittel (22, 24) damit in Eingriff kommt, wenn sich das Polsterelement (16) in seiner ersten Position befindet, wodurch die Bewegung des Polsterelementes zwischen der ersten und der zweiten Position behindert oder im Wesentlichen verhindert wird.

6. Sitz nach Anspruch 4 oder 5, wobei wenn das Haltemittel (26, 30) sich in der zweiten, nicht haltenden Position befindet, das Verriegelungsmittel (22, 24) nicht damit in Eingriff kommt, und sich das Polsterelement (16) zwischen der ersten und zweiten Position bewegen kann.

7. Sitz nach einem der Ansprüche 4 bis 6, wobei das Haltemittel (26, 30) einen Bolzen (38) einer Solenoid (30)-Anordnung umfasst, wobei der Bolzen selektiv zwischen der Halteposition und der nicht haltenden Position bewegbar ist.

8. Sitz nach einem der Ansprüche 4 bis 7, wobei das Verriegelungsmittel (22, 24) ein Hakenelement (24) umfasst, das an dem Polsterelement (16) befestigt ist.

9. Sitz nach Anspruch 8, wobei das Hakenelement (24) schwenkbar an dem Polsterelement (16) befestigt ist.

10. Sitz nach Anspruch 9, wobei die weitere Verriegelungsanordnung so angepasst ist, dass das Polsterelement (16) freigegeben wird, wodurch die Bewegung des Polsterelements zwischen der ersten und zweiten Position erlaubt wird, wobei die Freigabe durch manuelle Betätigung der Verriegelungsanordnung erfolgt.

## Revendications

1. Siège (10) de véhicule, comprenant :
une partie (12) de base comportant un espace (18) pour recevoir un ou plusieurs articles à l'intérieur,
un élément (16) de coussin déplaçable entre une première position dans laquelle il recouvre ledit espace et une seconde position dans laquelle l'accès audit espace est possible, et
un moyen (20) de verrouillage déplaçable en réponse au verrouillage des portes du véhicule ; le moyen de verrouillage étant déplaçable entre un état non verrouillé et un état verrouillé pour verrouiller ledit élément de coussin dans ladite première position et ainsi gêner ou sensiblement empêcher l'accès audit espace ;
dans lequel le moyen de verrouillage est configuré de façon à permettre le déplacement de l'élément de coussin de la seconde position à la première position quand le moyen de verrouillage se trouve dans l'état verrouillé.

2. Siège selon la revendication 1, dans lequel le moyen (20) de verrouillage est agencé pour verrouiller l'élément (16) de coussin dans la première position en réponse au verrouillage des portes du véhicule.

3. Siège selon la revendication 1 ou la revendication 2, dans lequel le moyen (20) de verrouillage est agencé pour déverrouiller l'élément (16) de coussin, permettant ainsi le déplacement de celui-ci entre les première et seconde positions, en réponse au déverrouillage des portes du véhicule.

4. Siège selon l'une quelconque des revendications précédentes, dans lequel le moyen (20) de verrouillage comprend un moyen (22, 24) de verrou monté sur l'élément (16) de coussin et un moyen (26, 30) d'arrêt agencé pour se déplacer entre une première position d'arrêt et une seconde position non d'arrêt.

5. Siège selon la revendication 4, dans lequel quand le moyen (26, 30) d'arrêt se trouve dans la première position d'arrêt, le moyen (22, 24) de verrou s'engage avec celui-ci quand l'élément (16) de coussin se trouve dans sa première position, pour ainsi gêner ou sensiblement empêcher le déplacement de l'élément de coussin entre les première et seconde positions.

6. Siège selon la revendication 4 ou la revendication 5, dans lequel quand le moyen (26, 30) d'arrêt se trouve dans la seconde position non d'arrêt, le moyen (22, 24) de verrou ne s'engage pas avec celui-ci et l'élément (16) de coussin est en mesure de se déplacer entre les première et seconde positions.

7. Siège selon l'une quelconque des revendications 4 à 6, dans lequel le moyen (26, 30) d'arrêt comprend une barre (38) d'un agencement à solénoïde (30), la barre étant déplaçable sélectivement entre les positions d'arrêt et non d'arrêt.

8. Siège selon l'une quelconque des revendications 4 à 7, dans lequel le moyen (22, 24) de verrou comprend un élément (24) de crochet monté sur l'élément (16) de coussin.

9. Siège selon la revendication 8, dans lequel l'élément (24) de crochet est monté de façon pivotante sur l'élément (16) de coussin.

10. Siège selon la revendication 9, dans lequel l'autre agencement de verrou est adapté pour libérer l'élément (16) de coussin afin de permettre le déplacement de l'élément de coussin entre les première et seconde positions, la libération étant effectuée par l'opération manuelle de l'agencement de verrou.
